# EUROPÄISCHE PATENTSCHRIFT

(11) **EP 1 554 107 B1**
(45) Veröffentlichungstag und Bekanntmachung des Hinweises auf die Patenterteilung: **09.12.2009**
(21) Anmeldenummer: 03808686.4
(22) Anmeldetag: 26.08.2003
(51) Int. Cl.: B29C 65/28, B29C 65/20, F23D 14/56

(54) **HEIZELEMENT FÜR EINE THERMOSCHWEISSVORRICHTUNG**
HEATING ELEMENT FOR A THERMOWELDING DEVICE
ELEMENT CHAUFFANT POUR UN DISPOSITIF DE THERMOSOUDAGE

(30) Priorität: 14.10.2002 DE 10247840
(43) Veröffentlichungstag der Anmeldung: 20.07.2005
(73) Patentinhaber: E.ON Ruhrgas AG, 45138 Essen (DE)
(72) Erfinder: ARTHKAMP, Jochen, 45665 Recklinghausen (DE); SEIFERT, Hartmut, 45770 Marl (DE)
(74) Vertreter: Harlacher, Mechthild
(86) Internationale Anmeldenummer: PCT/EP2003/009422
(87) Internationale Veröffentlichungsnummer: WO 2004/035298

(56) Entgegenhaltungen:
- CH-A- 334 038
- DE-A- 2 104 070
- DE-A- 10 019 163
- DE-B- 1 115 006
- FR-A- 1 219 314
- GB-A- 2 085 354
- US-A- 3 455 761
- US-A- 3 457 339

## Beschreibung

Die Erfindung betrifft ein Heizelement für eine Thermoschweißvorrichtung zum Erwärmen einer Fügefläche eines Werkstücks aus thermoplastischem Material, mit einer beheizbaren Aufheizkante, die an die Kontur der zu erwärmenden Fügefläche des Werkstücks angepaßt ist und mit einer Gasbrennereinrichtung, die auf der Rückseite der Aufheizkante angeordnet ist und deren Kontur folgt.

Aus der DE 11 15 006 B ist eine Schweißzange zum Verschweißen von Kunststoffrohren mit zwei halbkreisförmigen Schenkeln, die hohl ausgebildet sind. An jedem Schenkel ist ein Zuleitungsrohr für ein Brenngas oder ein Brenngasgemisch angeordnet. Eine einzige Flamme bildet sich jeweils an der Stelle aus, an der das Zuleitungsrohr in die Schenkel mündet.

Die US-A-3455 761 zeigt ebenfalls eine beheizte Schweißzange, bei der eine einzige Flamme in einem ringförmigen Hohlraum erzeugt wird.

Die CH 334 038 A zeigt eine weitere Vorrichtung zum Verschweißen von Rohren und Verbindungsstellen aus Kunststoff, mit einer Heizvorrichtung, die bei einer Ausführungsform mittels eines Gasbrenners, der eine einzige Flamme erzeugt beheizt wird.

Bei allen drei gekannten Vorrichtungen besteht die Gefahr, dass die Erwärmung der Aufheizkanten unregelmäßig erfolgt.

In der Thermoschweißvorrichtung werden die Fügeflächen der miteinander zu verbindenden Werkstücke so weit erwärmt, daß sich anschließend beim Zusammenfügen und Zusammenpressen der Werkstücke die gewünschte Schweißverbindung ergibt.

Die hierzu aus der Praxis bekannten Heizelemente bestehen aus Aluminiumblöcken, die von elektrischen Heizpatronen beheizt werden. Zwar besitzt Aluminium eine sehr gute Wärmeleitfähigkeit, jedoch wurde gefunden, daß die Gleichmäßigkeit der Erwärmung entlang der Aufheizkante zu Wünschen übrig läßt. Auch ist die maximale Temperatur auf ca. 250°C begrenzt.

Der Erfindung liegt die Aufgabe zugrunde, hier Abhilfe zu schaffen und ein Heizelement vorzuschlagen, das eine sehr gleichmäßige Erwärmung der Aufheizkante unter Erzielung höherer Temperaturen gewährleistet.

Zur Lösung dieser Aufgabe ist das eingangs genannte Heizelement erfindungsgemäß dadurch gekennzeichnet, dass die Gasbrennereinrichtung als Brennerrohr ausgebildet ist, das eine Mehrzahl von Düsenöffnungen aufweist, die sich über die Länge der Aufheizkante erstrecken und dass die Flammen der Gasbrennereinrichtung gegen die Rückseite der Aufheizkante (3) gerichtet sind.

Die Gasbrennereinrichtung ist in der Lage, eine sehr gleichmäßige Erwärmung der Aufheizkante zu bewirken. Auch ist die Beheizung direkt und dementsprechend sehr intensiv. So besteht ohne weiteres die Möglichkeit, die Aufheizkante auf Temperaturen zu bringen, die 450°C und mehr betragen. Das Heizelement arbeitet mit hohem Wirkungsgrad.

Für das Heizelement kommen grundsätzlich sämtliche Materialien in Frage, die eine ausreichende Temperaturbeständigkeit besitzen. Zu denken ist beispielsweise an keramische Materialien, die außerdem den Vorteil aufweisen, daß auch komplizierte Konturen der Aufheizkante fertigungstechnisch ohne weiteres beherrschbar sind. Letzteres gilt auch für Edelstahlblech, und es wird daher vorgeschlagen, daß das Heizelement mindesten im Bereich der Aufheizkante aus Edelstahl besteht. Die Verwendung von Edelstahl bringt noch einen weiteren Vorteil mit sich, dessen Bedeutung nicht zu unterschätzen ist. Das plastifizierte thermoplastische Material neigt dazu, an Aluminium zu haften. Diese Neigung ist bei Edelstahl nicht vorhanden. Anhaftende Materialreste beeinträchtigen die Qualität der aktuellen Fügeverbindung und auch der nachfolgenden Fügeverbindung. Außerdem erhöht sich die Umweltbelastung durch die zusätzliche Freisetzung von Gasen und Dämpfen.

Wie bereits erwähnt, ist die Beheizung durch die Gasbrennereinrichtung sehr intensiv. Dadurch wird eine etwaige geringe Wärmeleitfähigkeit des Materials der Aufheizkante mehr als kompensiert. Dies gilt beispielsweise für Edelstahl.

Das Heizelement nach der Erfindung ist wesentlich leichter als ein Aluminiumblock. Es sind also geringere Massen zu bewegen.

Auch ergeben sich schnellere Aufheiz- und Abkühlraten. Schließlich kann eine längere Lebensdauer erzielt werden.

Bei alledem sind die erfindungsgemäßen Maßnahmen äußerst einfach und kostengünstig.

Ferner hat es sich als vorteilhaft erwiesen, die Gasbrennereinrichtung als Vormischbrennereinrichtung zu betreiben. Die Gasbrennereinrichtung kann dabei in einem Gehäuse angeordnet sein, welches die Aufheizkante bildet.

In wesentlicher Weiterbildung der Erfindung wird vorgeschlagen, daß die Gasbrennereinrichtung mit einer Absaugeinrichtung gekoppelt ist, die die beim Fügen entstehenden Gase und Dämpfe der Verbrennung zuführt. Die Nachverbrennung der Gase und Dämpfe führt zu deren problemloser Entsorgung, wozu eine elektrische Beheizung nicht in der Lage ist.

Überraschenderweise wurde gefunden, daß der Verlauf der Kontur der Aufheizkante Einfluß auf den örtlichen Wärmebedarf hat, ein Umstand, dem mit einer elektrischen Beheizung nicht Rechnung getragen werden kann. In Weiterbildung der Erfindung hingegen ist dies möglich, und zwar dadurch, daß die Heizleistung der Gasbrennereinrichtung an den Verlauf der Kontur der Aufheizkante angepaßt ist. Dies trägt dazu bei, eine gleichmäßige Temperatur der Fügefläche zu erzielen, und zwar insbesondere dann, wenn die Aufheizkante in den Bereichen der Umlenkstellen ihrer Kontur intensiver beheizbar ist als in den Bereichen geradlinigen Verlaufs.

Die Gestaltung der Gasbrennereinrichtung als Brennerrohr zeichnet sich durch eine besonders einfache und robuste Konstruktion aus.

Dabei können die Düsenöffnungen in einer Reihe angeordnet sein, und zwar 800 bis 1000 Düsen/m.

Um die gewünschte Leistungsanpassung zu erzielen, sind die Abstände zwischen den Düsenöffnungen über der Länge des Brennerrohres vorzugsweise unterschiedlich.

Die Erfindung wird im folgenden anhand eines bevorzugten Ausführungsbeispiels im Zusammenhang mit der beiliegenden Zeichnung näher erläutert. Die Zeichnung zeigt in:
Figur 1 einen Grundriß eines erfindungsgemäßen Heizelements;
Figur 2 einen Schnitt entlang der Linie II-II in Figur 1;
Figur 3 einen Teil-Grundriß eines Brennerrohrs.

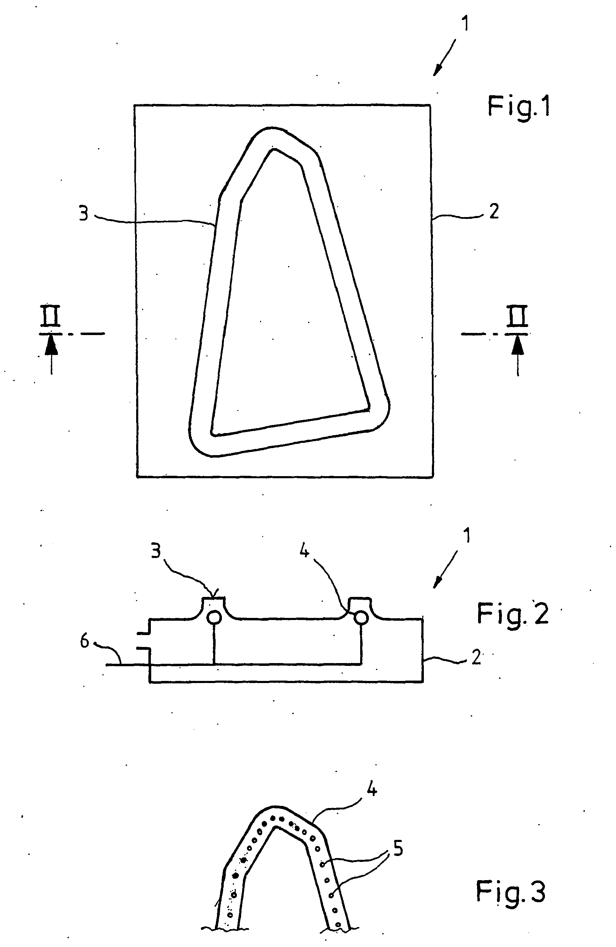

Die Figuren 1 und 2 zeigen ein Heizelement 1 mit einem Gehäuse 2, in dessen oberer Wand eine Aufheizkante 3 ausgebildet ist. Die umlaufende Kontur der Aufheizkante ist an eine zu erwärmende Fügelfläche eines Werkstücks aus thermoplastischem Material angepaßt.

Im vorliegenden Fall verläuft die Aufheizkante in einer Ebene senkrecht zur Zeichenebene. Dies stellt nur eine der möglichen Konfigurationen dar. Die Praxis wird häufig fordern, daß die Aufheizkante einer Raumkurve folgt.

Unterhalb der Aufheizkante 3 verläuft ein Brennerrohr 4, das, wie Figur 3 zeigt, eine Mehrzahl von Düsenöffnungen 5 aufweist die Düsenöffnungen 5 sind nach oben gerichtet, so daß die Flammen direkt auf die Rückseite der Auf heizkante auftreffen. Das Brennerrohr 4 folgt dem Verlauf der Aufheizkante 3, wobei die Düsenöffnungen 5 über die gesamte Länge des Brennerrohres 4 verteilt sind. Im vorliegenden Fall sind 1000 Düsenöffnungen 5 pro Meter Brennerrohr 4 vorgesehen.

Die erfindungsgemäße Anordnung ermöglicht eine sehr gleichmäßige Erwärmung der Aufheizkante 3, und zwar im vorliegenden Fall auf eine Temperatur von 420°C. Hierzu besteht die obere Wand des Gehäuses 2 aus Edelstahl, vorzugsweise aus Edelstahl. Edelstahlblech bringt den zusätzlichen Vorteil mit sich, daß plastifizierte Reste des thermoplastischen Materials nicht haften bleiben.

Das Brennerrohr 4 wird als Vormischbrenner betrieben und ist über eine Leitung 6 an eine nicht dargestellte Vormischeinrichtung angeschlossen.

Ferner ist eine nicht dargestellte Absaugeinrichtung vorgesehen, die die beim Fügen entstehenden Gase und Dämpfe der Verbrennung zuführt.

Im Rahmen der Erfindung sind durchaus Abwandlungsmöglichkeiten gegeben. So kann die Gasbrennereinrichtung aus einzelnen, aneinander anschließenden und getrennt befeuerten Segmenten bestehen, sofern diese die Aufheizkante lückenlos beheizen. Auch kann die Gasbrennereinrichtung als Mündungsmischer arbeiten. Die Düsenöffnungen des Ausführungsbeispiels bilden eine einzige Reihe.

## Patentansprüche

1. Heizelement für eine Thermoschweißvorrichtung zum Erwärmen einer Fügefläche eines Werkstücks aus thermoplastischem Material, mit einer beheizbaren Aufheizkante (3), die an die Kontur der zu erwärmenden Fügefläche des Werkstücks angepaßt ist und mit einer Gasbrennereinrichtung (4), die auf der Rückseite der Aufheizkante (3) angeordnet ist und deren Kontur folgt,
**dadurch gekennzeichnet,**
**dass** die Gasbrennereinrichtung (4) als Brennerrohr ausgebildet ist, das eine Mehrzahl von Düsenöffnungen (5) aufweist, die sich über die Länge der Aufheizkante (3) erstrecken und dass die Flammen der Gasbrennereinrichtung (4) gegen die Rückseite der Aufheizkante (3) gerichtet sind.

2. Heizelement nach Anspruch 1, **dadurch gekennzeichnet, daß** es mindestens im Bereich der Aufheizkante (3) aus Edelstahl besteht.

3. Heizelement nach einem der Ansprüche 1 oder 2, **dadurch gekennzeichnet, daß** die Gasbrennereinrichtung (4) als Vormischbrennereinrichtung betreibbar ist.

4. Heizelement nach Anspruch 3, **dadurch gekennzeichnet, daß** die Gasbrennereinrichtung (4) in einem Gehäuse (2) angeordnet ist, welches die Aufheizkante (3) bildet.

5. Heizelement nach einem der Ansprüche 1 bis 4, **dadurch gekennzeichnet, daß** die Gasbrennereinrichtung (4) mit einer Absaugeinrichtung gekoppelt ist, die die beim Fügen entstehenden Gase und Dämpfe der Verbrennung zuführt.

6. Heizelement nach einem der Ansprüche 1 bis 5, **dadurch gekennzeichnet, daß** die Heizleistung der Gasbrennereinrichtung (4) an den Verlauf der Kontur der Aufheizkante (3) angepaßt ist.

7. Heizelement nach Anspruch 6, **dadurch gekennzeichnet, daß** die Aufheizkante in den Bereichen der Umlenkstellen ihrer Kontur intensiver beheizbar ist als in den Bereichen geradlinigen Verlaufs.

8. Heizelement nach Anspruch einem der Ansprüche 1 bis 7, **dadurch gekennzeichnet, daß** die Düsenöffnungen (5) in einer Reihe angeordnet sind, und zwar 800 bis 1000 Düsenöffnungen/m.

9. Heizelement nach Anspruch 8, **dadurch gekennzeichnet, daß** die Abstände zwischen den Düsenöffnungen (5) des Brennerrohres (4) über dessen Länge unterschiedlich sind.

## Claims

1. Heating element for a thermowelding device to heat a jointing surface of a workpiece made of thermoplastic material, with a heatable heating edge (3) which matches the contour of the workpiece jointing surface to be heated, and with a gas burner device (4) which is arranged on the rear face of the heating edge (3) and follows the latter's contour,
**characterised in that**
the gas burner device (4) is designed as a burner pipe which exhibits a plurality of nozzle openings (5) that extend over the length of the heating edge (3), and **characterised in that** the flames of the gas burner device (4) are directed towards the rear face of the heating edge (3).

2. Heating element according to claim 1, **characterised in that** at least the heating edge (3) is made of stainless steel.

3. Heating element according to any one of claims 1 or 2, **characterised in that** the gas burner device (4) can be operated as an aerated burner device.

4. Heating element according to claim 3, **characterised in that** the gas burner device (4) is arranged in a housing (2) which forms the heating edge (3).

5. Heating element according to any one of claims 1 through 4, **characterised in that** the gas burner device (4) is linked with a suction device which passes the gases and vapours formed during jointing to the combustion process.

6. Heating element according to any one of claims 1 through 5, **characterised in that** the heat output of the gas burner device (4) is adjusted to match the contour of the heating edge (3).

7. Heating element according to claim 6, **characterised in that** the heating edge can be heated more intensively in the curve zones of its contour than in the straight zones.

8. Heating element according to any one of claims 1 through 7, **characterised in that** the nozzle openings (5) are arranged in a row with 800 to 1,000 nozzle openings per metre.

9. Heating element according to claim 8, **characterised in that** the distances between the nozzle openings (5) of the burner pipe (4) vary over its length.

## Revendications

1. Elément de chauffage pour un dispositif de soudage thermique, destiné à réchauffer une surface d'assemblage d'une pièce à fabriquer en matériau thermoplastique, avec un bord de chauffage réchauffable (3), adapté au contour de la surface d'assemblage à réchauffer, et un dispositif de brûleurs à gaz (4), disposé à la face arrière du bord de chauffage (3) et qui suit le contour de ce dernier,
**caractérisé par le fait,**
**que** le dispositif de brûleurs à gaz (4) est conçu sous forme de tube de brûleur présentant plusieurs orifices de jet (5) qui s'étendent le long du bord de chauffage (3), et que les flammes du dispositif de brûleurs à gaz (4) sont orientées en direction de la face arrière du bord de chauffage (3).

2. Elément de chauffage suivant la revendication 1, **caractérisé par le fait qu'**il consiste, au moins au niveau du bord de chauffage (3), en acier inoxydable.

3. Elément de chauffage suivant l'une des revendications 1 ou 2, **caractérisé par le fait que** le dispositif de brûleurs à gaz (4) peut être exploité comme dispositif de brûleurs à prémélange.

4. Elément de chauffage suivant la revendication 3, **caractérisé par le fait que** le dispositif de brûleurs à gaz (4) est disposé dans une enveloppe (2) qui forme le bord de chauffage (3).

5. Elément de chauffage suivant l'une des revendications 1 à 4, **caractérisé par le fait que** le dispositif de brûleurs à gaz (4) est lié à un dispositif d'aspiration qui amène les gaz et les vapeurs, générés par le procédé d'assemblage, à la combustion.

6. Elément de chauffage suivant l'une des revendications 1 à 5, **caractérisé par le fait que** la puissance de chauffage du dispositif de brûleurs à gaz (4) est adaptée au cours du contour du bord de chauffage (3).

7. Elément de chauffage suivant la revendication 6, **caractérisé par le fait que** le bord de chauffage (3) peut être réchauffé plus intensément aux endroits de changement de direction de son contour que sur son cours rectiligne.

8. Elément de chauffage suivant l'une des revendications 1 à 7, **caractérisé par le fait que** les orifices de jet (5) sont disposées en une rangée, et ce au nombre de 800 à 1000/m.

9. Elément de chauffage suivant la revendication 8, **caractérisé par le fait que** les distances entre les orifices de jet (5) du tube de brûleur (4) diffèrent sur la longueur de ce dernier.
